# EUROPÄISCHE PATENTANMELDUNG

(11) **EP 3 809 661 A1**
(43) Veröffentlichungstag der Anmeldung: **21.04.2021**
(21) Anmeldenummer: 19204105.1
(22) Anmeldetag: 18.10.2019
(51) Int. Cl.: H04L 29/06

(54) **VERFAHREN ZUR AUTHENTIFIZIERUNG EINER CLIENTVORRICHTUNG BEI EINEM ZUGRIFF AUF EINEN ANWENDUNGSSERVER**

(71) Anmelder: Siemens Aktiengesellschaft, 80333 München (DE)
(72) Erfinder: Falk, Rainer, 85586 Poing (DE); Fries, Steffen, 85598 Baldham (DE)

(57) **Zusammenfassung**

Verfahren zur Authentifizierung einer Clientvorrichtung (C) bei einem Zugriff auf einen Anwendungsserver (AppS), der eine Anwendung bereitstellt, aufweisend die Schritte:
- Anfordern (S1) eines Authentisierungsnachweises (T) für den Zugriff auf den Anwendungsserver (AppS) über eine erste sichere Kommunikationsverbindung (10) bei einem Authentifizierungsserver (AAS) durch die Clientvorrichtung (C),
- Empfangen (S2) des Authentisierungsnachweises (T), in den ein erster Sicherheitsparameter vom Authentifizierungsserver (AAS) eingefügt wurde, in der Clientvorrichtung (C),
- Einrichten (S3) einer zweiten sicheren Kommunikationsverbindung (11) zwischen der Clientvorrichtung (C) und dem Anwendungsserver (AppS), die entsprechend einem zweiten Sicherheitsparameter konfiguriert ist,
- Senden (S4) des Authentisierungsnachweises (T) über die zweite sichere Kommunikationsverbindung (11) von der Clientvorrichtung (C) an den Anwendungsserver (AppS),
- Überprüfen (S5) des zweiten Sicherheitsparameters mit dem ersten Sicherheitsparameter aus dem Authentisierungsnachweis (T) durch den Anwendungsserver (AppS), und
- Gewähren (S6) des Zugriffs für die Clientvorrichtung (C) auf den Anwendungsserver (AppS) nur dann, wenn der zweite Sicherheitsparameter dem ersten Sicherheitsparameter entspricht.

## Beschreibung

Die Erfindung betrifft ein Verfahren zur Authentifizierung einer Clientvorrichtung zum Zugriff auf einen Anwendungsserver, der eine Anwendung bereitstellt, sowie einen Anwendungsserver, einen Authentifizierungsserver und die Clientvorrichtung, die derart ausgebildet sind, das Verfahren durchzuführen.

Bei Kommunikationsverbindungen, beispielsweise im Internet, werden kryptografische Sicherheitsprotokolle, wie beispielsweise ein Transportschichtsicherheitsprotokoll, im Weiteren auch als TLS-Protokoll bezeichnet, oder ein IP Sicherheitsprotokoll IPsec verwendet, um eine Datenübertragung über die Kommunikationsverbindung vor Abhören und Manipulation zu schützen. Weiterhin werden die Kommunikationsteilnehmer authentifiziert. Häufig wird dazu eine zertifikatbasierte Authentifizierung durchgeführt. Dazu müssen jedoch digitale Zertifikate für die Teilnehmer ausgestellt und an die Teilnehmer verteilt werden. Bei einer Kommunikationsverbindung zwischen einem Teilnehmer und einem Server wird daher häufig lediglich die Serverseite mittels eines Zertifikats authentifiziert. Der Teilnehmer authentifiziert sich dann auf Applikationsebene, beispielsweise durch Übertragen eines Nutzernamens und Passwortes.

Um die Authentifizierung nicht mit jeder Anfrage bei einem Server wiederholen zu müssen, werden von einem Anmeldedienst, beispielsweise einem Identifizierungs- und Zugangsmanagementdienst, sogenannte Token bereitgestellt. Ein Teilnehmer erhält vom Identifizierungs- und Zugangsmanagementdienst ein Token, das er in weiteren Anfragen an den Server zur Authentifizierung, beispielsweise über eine TLS-Verbindung, überträgt.

Besitzt der Kommunikationsteilnehmer kein eigenes Zertifikat oder lediglich ein selbstsigniertes digitales Zertifikat, das nicht von einer vertrauenswürdigen Stelle signiert ist, so kann die Authentizität des Kommunikationsteilnehmers nur unbefriedigend überprüft und gewährleistet werden.

Es ist somit die Aufgabe der vorliegenden Erfindung, die Authentifizierung eines Kommunikationsteilnehmers beim Zugriff auf einen Anwendungsserver zu vereinfachen und zu verbessern.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Authentifizierung einer Clientvorrichtung bei einem Zugriff auf einen Anwendungsserver, der eine Anwendung bereitstellt, aufweisend die Schritte
- Anfordern eines Authentisierungsnachweises für den Zugriff auf den Anwendungsserver über eine erste sichere Kommunikationsverbindung bei einem Authentifizierungsserver durch die Clientvorrichtung,
- Empfangen des Authentisierungsnachweises, in den ein erster Sicherheitsparameter vom Authentifizierungsserver eingefügt wurde, durch die Clientvorrichtung,
- Einrichten einer zweiten sicheren Kommunikationsverbindung zwischen der Clientvorrichtung und dem Anwendungsserver, die entsprechend einem zweiten Sicherheitsparameter konfiguriert ist,
- Senden des Authentisierungsnachweises über die zweite sichere Kommunikationsverbindung von der Clientvorrichtung an den Anwendungsserver,
- Überprüfen des zweiten Sicherheitsparameters der zweiten sicheren Kommunikationsverbindung mit dem ersten Sicherheitsparameter aus dem Authentisierungsnachweis durch den Anwendungsserver und
- Gewähren des Zugriffs für die Clientvorrichtung auf den Anwendungsserver nur dann, wenn der zweite Sicherheitsparameter dem ersten Sicherheitsparameter entspricht.

Dies hat den Vorteil, dass über den Authentisierungsnachweis und somit vom Authentifizierungsserver Sicherheitsparameter für die zweite sichere Kommunikationsverbindung, über die der Authentisierungsnachweis von der Clientvorrichtung zum Anwendungsserver übermittelt wird, vorgegeben und durchgesetzt werden können. Der Authentisierungsnachweis ist des Weiteren ein bekannter und häufig verwendeter Authentisierungsparameter, der einer Clientvorrichtung von einem Authentifizierungsserver bereitgestellt wird. Der Authentifizierungsserver stellt beispielsweise einen Identitäts- und Zugangsmanagementdienst bereit, der den Client für den Zugang zu mindestens einer Anwendung autorisiert. Durch das Einfügen des ersten Sicherheitsparameters kann der Authentisierungsnachweis zum verbesserten Integritäts- und Manipulationsschutz der Clientvorrichtung und der zweiten sicheren Kommunikationsverbindung beitragen. Es ist keine zusätzliche weitere Kennung dazu notwendig.

Der Authentisierungsnachweis kann beispielsweise ein Authentisierungstoken sein, z.B. ein JSON Web Token (JSON: JavaScript Object Notation). Der erste und der zweite Sicherheitsparameter können aus einem oder insbesondere auch aus mehreren Daten-Komponenten bestehen, die eine Sicherheitskonfiguration der ersten bzw. zweiten sicheren Kommunikationsverbindung angeben.

In einer vorteilhaften Ausführungsform werden die erste und die zweite sichere Kommunikationsverbindung entsprechend einem Sicherheitsprotokoll, insbesondere einem TLS-Protokoll oder einem IPsec Protokoll, eingerichtet.

Dies hat den Vorteil, dass bereits auf Transportschichtebene, entsprechend einem OSI-Referenzmodell, eine Manipulation der übertragenen Anforderungsnachricht und insbesondere des übertragenen Authentisierungsnachweises durch kryptographische Verfahren erschwert werden. Des Weiteren kann eine Authentifizierung der Kommunikationspartner, d.h. der Clientvorrichtung und des Authentifizierungsservers sowie der Clientvorrichtung und dem Anwendungsserver, durchgeführt werden.

In einer vorteilhaften Ausführungsform enthält der erste Sicherheitsparameter mindestens einen kryptografischen Schlüssel oder mindestens eine Referenz auf den kryptografischen Schlüssel zum Authentifizieren der Clientvorrichtung durch den Anwendungsserver.

Somit kann der Authentifizierungsserver Kriterien vorgeben, die die zweite sichere Kommunikationsverbindung aufweisen muss, um vom Anwendungsserver akzeptiert zu werden. Somit erlangt der Authentifizierungsserver eine Kontroll- und Steuerungsfunktion auch für die zweite Kommunikationsverbindung zwischen der Clientvorrichtung und dem Anwendungsserver. Der kryptografischen Schlüssel wird der Clientvorrichtung beispielsweise in Form eines digitalen Zertifikates übermittelt. Somit wird der Authentisierungsnachweis nur dann vom Anwendungsserver akzeptiert und der Zugriff gewährt, wenn der im Authentisierungsnachweis enthaltene digitale Schlüssel beim Aufbau der zweiten sicheren Kommunikationsverbindung zur Authentifizierung des Clients verwendet wurde. Anstatt des Zertifikates selbst kann auch eine Referenz, beispielsweise ein sogenannter Fingerabdruck, der beispielsweise durch eine Hashfunktion erstellt wird, im ersten Sicherheitsparameter enthalten sein.

In einer vorteilhaften Ausführungsform enthält der erste Sicherheitsparameter zusätzlich mindestens eines der nachfolgenden Daten:
Protokollidentifizierungsdaten zum identifizieren des Sicherheitsprotokolls;
Protokolldaten zum Definieren von Protokolleigenschaften des Sicherheitsprotokolls;
Absicherungsdaten zum Bestimmen einer Absicherung für eine bestimmte Anwendung;
Laufzeitdaten zur Angabe einer Laufzeit, während der die sichere Kommunikationsverbindung zum Austausch von Daten zwischen der Clientvorrichtung und dem Anwendungsserver anwendbar ist; und/oder
Kommunikationspartnerdaten zum Bestimmen von Voraussetzungen für die Clientvorrichtung und den Authentifizierungsserver bzw. den Anwendungsserver.

Protokollidentifizierungsdaten sind dabei Informationen, beispielsweise zur verwendeten Version des Sicherheitsprotokolls oder zur Spezifikation des Typs des verwendeten Sicherheitsprotokolls. Verschiedene Typen von möglichen Sicherheitsprotokollen sind beispielsweise das TLS-Protokoll oder Unterarten des TLS-Protokolls, aber auch andere Sicherheitsprotokolle, wie ein SSH-Protokoll, ein QUIC-Protokoll, ein IPsec-Protokoll, ein http-Protokoll, ein Bluetooth-Protokoll, ein WLAN-Protokoll, ein ZigBee-Protokoll, ein IKE-Protokoll oder ein MACsec-Protokoll.

Protokolldaten zum Definieren von Protokolleigenschaften können im Falle von beispielsweise einem TLS-Protokoll Informationen über eine Wiederaufnahme einer Verbindung, über eine Neuaushandlung einer Verbindung und/oder über eine Kompression von Daten, aber auch Information zur verwendeten Verschlüsselungsfunktion, auch Cipher Suite genannt, enthalten. Diese Protokollidentifizierungsdaten und Protokolldaten zum Definieren von Protokolleigenschaften des Sicherheitsprotokolls werden beispielsweise in einem kryptografischen Authentifizierungsprotokoll, wie beispielsweise einem TLS-Handshake-Protokoll, zwischen der Clientvorrichtung und dem Authentifizierungsserver beim Aufbau der ersten sicheren Kommunikationsverbindung verwendet.

Durch Absicherungsdaten zum Bestimmen einer Absicherung für eine bestimmte Anwendung können eine oder mehrere Anwendungen angegeben sein, die durch die sichere Kommunikationsverbindung aufgerufen und für die Nutzdaten übertragen werden dürfen.

Die Laufzeitdaten geben insbesondere an, wie lange die sichere Kommunikationsverbindung verwendbar ist. Dieses entspricht insbesondere einer Laufzeit einer Sitzung zwischen der Clientvorrichtung und dem Authentifizierungsserver bzw. dem Anwendungsserver.

Kommunikationspartnerdaten betreffen die Clientvorrichtung und insbesondere den Anwendungsserver und können Informationen, wie beispielsweise Berechtigungsnachweise, geographischer Standort, zu mindestens einem vorgegebenen erlaubten Anwendungsservers sein.

Somit können flexibel Vorgaben zur zweiten sicheren Kommunikationsverbindung an dem Anwendungsserver übermittelt werden, die erfüllt sein müssen, um beispielsweise eine bestimmte Anwendung aufrufen zu können. Die damit mögliche Vorgabe einer bestimmten Client-Authentisierung im Anwendungsserver bietet einen hohen Schutz des Authentisierungsnachweises. So kann beispielsweise bei Verwendung eines selbstsignierten Clientzertifikats die erste Sicherheitsinformation eine neuere Sicherheitsprotokollversion und/oder eine geringe Laufzeit enthalten.

In einer vorteilhaften Ausführungsform ermittelt der Authentifizierungsserver einen Sicherheitsparameter der ersten sicheren Kommunikationsverbindung und fügt diesen als ersten Sicherheitsparameter in den Authentisierungsnachweis ein.

Damit kann die Clientvorrichtung lediglich Zugriff auf den Anwendungsserver erlangen, wenn die zweite sichere Kommunikationsverbindung mit dem gleichen Sicherheitsparameter, insbesondere mit den gleichen im Sicherheitsparameter enthaltenen Einzeldaten der Sicherheitsinformation, konfiguriert ist, wie die erste sichere Kommunikationsverbindung. Der erste Sicherheitsparameter sowie der zweite Sicherheitsparameter umfassen, wie bereits ausgeführt, mindestens einen, bevorzugt aber eine Vielzahl von Einzeldaten zur Konfiguration des Sicherheitsprotokolls, das zum Aufbau der ersten bzw. zweiten sicheren Kommunikationsverbindung verwendet wird.

In einer vorteilhaften Ausführungsform wird die Clientvorrichtung mit einem ersten Clientzertifikat am Aufbau der ersten sicheren Kommunikationsverbindung im Authentifizierungsserver authentifiziert, das erste Clientzertifikat vom Authentifizierungsserver ermittelt und als ersten Sicherheitsparameter in den Authentisierungsnachweis eingefügt.

Somit wird der Authentisierungsnachweis im Anwendungsserver nur dann akzeptiert und ein Zugriff gewährt, wenn zur Authentifizierung der Clientvorrichtung sowohl in der ersten als auch in der zweiten sicheren Kommunikationsverbindung das gleiche Clientzertifikat verwendet wird. Insbesondere bei Verwendung von selbstsignierten Clientzertifikaten ist durch das Verfahren ebenfalls die Sicherheit erhöht. Somit wird Wechsel oder eine Veränderung des Clientzertifikats zwischen der ersten und der zweiten sicheren Kommunikationsverbindung verhindert. Dadurch können auch selbstsignierte Clientzertifikate einen erweiterten Schutz vor Angriffen durch einen unerlaubten Dritten bereitstellen. Somit ist kein aufwendiges Verteilen von Clientzertifikaten notwendig.

In einer vorteilhaften Ausführungsform wird das erste Client-zertifikat nur dann als erste Sicherheitsinformation in den Authentisierungsnachweis eingefügt, wenn das erste Clientzertifikat mit mindestens einem im Authentifizierungsserver vorgegebenen Clientzertifikat übereinstimmt.

Dies ermöglicht es, die Clientzertifikat, die für den Zugriff auf den Anwendungsserver erlaubt sind, durch den Authentifizierungsserver festzulegen. Beispielsweise werden lediglich die in einem Nutzerprofil des Clients vorgegebenen Clientzertifikate zugelassen.

In einer vorteilhaften Ausführungsform wird eine Referenz auf das vorgegebene Clientzertifikat als ersten Sicherheitsparameter in den Authentisierungsnachweis eingefügt.

Eine solche Referenz kann beispielsweise ein sogenannter Fingerprint, beispielsweise ein durch eine Hashfunktion angewandt auf das Clientzertifikat erstellter Wert, auch als Fingerabdruck bezeichnet, erstellt werden. Eine Referenz kann auch eine Seriennummer zusammen mit der Kennung des Ausstellers des Clientzertifikates sein. Dies reduziert die Daten, die in den Authentisierungsnachweis eingefügt werden müssen und spart somit Übertragungsbandbreite auf der ersten und zweiten sicheren Kommunikationsverbindung ein.

In einer vorteilhaften Ausführungsform fügt der Authentifizierungsserver mehrere unterschiedliche vorgegebene Client-zertifikate in den ersten Sicherheitsparameter des Authentisierungsnachweises ein.

Dies hat den Vorteil, dass insbesondere mehrere Clientzertifikate durch einem Authentisierungsnachweis bestätigt werden können. Die Clientvorrichtung kann anschließend die zweite sichere Kommunikationsverbindung mit jedem der im Authentisierungsnachweis angegebenen Clientzertifikate aufbauen. Beispielsweise kann die Clientvorrichtung beim Aufruf von unterschiedlichen Diensten ein entsprechendes dienstspezifisches Clientzertifikat zum Aufbau der zweiten sicheren Kommunikationsverbindung nutzen, ohne das entsprechende dienstspezifische Clientzertifikat vorher auch für die erste sichere Kommunikationsverbindung verwendet zu haben. Dies ermöglicht der Clientvorrichtung größere Flexibilität in der Nutzung des Authentisierungsnachweises für mehrere Dienste bzw. Anwendungen.

In einer vorteilhaften Ausführungsform ermittelt die Clientvorrichtung aus Authentisierungsnachweis (T) den ersten Sicherheitsparameter und richtet die zweite sichere Kommunikationsverbindung (11) entsprechend dem ermittelten ersten Sicherheitsparameter ein.

Dies ermöglicht es dem Authentifizierungsserver der Clientvorrichtung einen Sicherheitsparameter vorzugeben, den die Clientvorrichtung wiederum zum Einrichten der zweiten sicheren Kommunikationsvorrichtung zum Anwendungsserver verwendet. Dadurch kann der Sicherheitsparameter der sicheren zweiten Kommunikationsverbindung flexibel, beispielsweise abhängig von der Art der angeforderten Anwendung oder dem aktuell zuständigen Anwendungsserver durch den Authentifizierungsserver vorgegeben werden.

In einer vorteilhaften Ausführungsform wird ein Schlüsselableitungsparameter als erster Sicherheitsparameter in den Authentisierungsnachweis eingefügt.

Dies ist besonders vorteilhaft, wenn die Clientvorrichtung nur einen eingeschränkten Zugriff auf eine Schlüsselverteil-Infrastruktur besitzt, jedoch ein Vertrauensverhältnis zu einem Authentifizierungsserver besteht und/oder die Clientvorrichtung im Vorfeld noch keine direkte Kommunikationsverbindung mit dem Anwendungsserver hatte. Dies ermöglicht es der Clientvorrichtung aus dem Schlüsselableitungsparameter einen Authentifizierungsschlüssel zu generieren und zum Aufbau der zweiten sicheren Kommunikationsverbindung zum Anwendungsserver zu verwenden. Durch die Schlüsselableitungsparameter im Authentisierungsnachweis kann der Anwendungsserver den verwendeten Clientschlüssel selbst erzeugen und gegenüber dem in der zweiten sicheren Kommunikationsverbindung verwendeten Clientschlüssel überprüfen und entsprechend dem Prüfergebnis Zugriff auf den Anwendungsserver gewähren.

Ein zweiter Aspekt der Erfindung betrifft einen Authentifizierungsserver zur Authentifizierung einer Clientvorrichtung zum Zugriff auf einen Anwendungsserver, der derart ausgebildet ist, das beschriebene Verfahren auszuführen.

Ein solcher Authentifizierungsserver kontrolliert die für einen Zugriff auf den Anwendungsserver gültigen Sicherheitsparameter der zweiten sicheren Kommunikationsverbindung und trägt somit zur Manipulationssicherheit des Zugriffs der Clientvorrichtung auf den Anwendungsserver bei. Der Authentifizierungsserver kann dabei den ersten Sicherheitsparameter, insbesondere das Clientzertifikat, gegenüber einer Liste von widerrufenen Zertifikaten oder auch einer Liste von zugelassenen Zertifikaten prüfen. Der Authentifizierungsserver übernimmt somit Aufgaben, die üblicherweise von einer Öffentlichen Schlüsselinfrastruktur (PKI), beispielsweise einer Zertifizierungsstelle, durchgeführt werden.

Ein weiterer Aspekt der Erfindung betrifft einen Anwendungsserver zur Authentifizierung einer Clientvorrichtung zum Zugriff auf eine Anwendung, der derart ausgebildet ist, das beschriebene Verfahren auszuführen. Der Anwendungsserver kann dadurch die Sicherheitsparameter der zweiten sicheren Kommunikationsverbindung gegenüber dem Authentifizierungstoken überprüfen und somit die Authentizität der Clientvorrichtung überprüfen.

In einem weiteren Aspekt betrifft die Erfindung eine Clientvorrichtung, die derart ausgebildet ist, das beschriebene Verfahren auszuführen.

Eine solche Clientvorrichtung kann ein selbstsigniertes Clientzertifikat nutzen und durch die Bestätigung des Authentifizierungsservers die Gültigkeit bzw. Integrität des selbstsignierten Clientzertifikates bestätigen lassen.

Ein weiterer Aspekt der Erfindung betrifft ein Computerprogrammprodukt, das direkt in einen Speicher eines digitalen Computers ladbar ist und Programmcodeteile umfasst, die dazu geeignet sind, die Schritte des beschriebenen Verfahrens durchzuführen.

Sofern es in der nachfolgenden Beschreibung nicht anders angegeben ist, beziehen sich die Begriffe "anfordern", "empfangen", "einrichten", "senden", "überprüfen", "gewähren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere soll der Ausdruck "Server" möglichst weit ausgelegt werden, um insbesondere elektronische Vorrichtungen mit Datenverarbeitungseigenschaften abzudecken. Ein Server kann dabei beispielsweise ein verteiltes Rechnersystem, ein Computer, oder auch andere Kommunikationsgeräte, die rechnergestützt Daten verarbeiten können, sein.

Unter einem Prozessor kann im Zusammenhang mit der Erfindung beispielsweise eine elektronische Komponente oder eine elektronische Schaltung verstanden werden. Bei einem Prozessor kann es sich insbesondere um einen Hauptprozessor, einen Mikroprozessor oder einen Mikrocontroller, beispielsweise eine anwendungsspezifische integrierte Schaltung oder einen Signalprozessor, möglicherweise in Kombination mit einer Speichereinheit zum Speichern von Programmbefehlen etc. handeln.

Ein Computerprogrammprodukt, wie z. B. ein Computerprogrammmittel, kann beispielsweise als Speichermedium, wie z. B. eine Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens und Vorrichtungen sind in den Zeichnungen beispielhaft dargestellt und werden anhand der nachfolgenden Beschreibungen näher erläutert. Es zeigen:
- Fig. 1: ein Anwendungsszenario des erfindungsgemäßen Verfahrens mit jeweils einem Ausführungsbeispiel einer erfindungsgemäßen Clientvorrichtung bzw. eines erfindungsgemäßen Authentifizierungsservers und Anwendungsservers in schematischer Darstellung;
- Fig. 2: ein erstes Ausführungsbeispiel des erfindungsgemäßen Verfahrens als Flussdiagramm;
- Fig. 3: ein zweites Ausführungsbeispiel des erfindungsgemäßen Verfahrens mit einem fest zugewiesenen Clientzertifikat als Nachrichtenablaufdiagramm;
- Fig. 4: ein dritten Ausführungsbeispiel des erfindungsgemäßen Verfahrens mit einem selbstsignierten Clientzertifikat als Nachrichtenablaufdiagramm;
- Fig. 5: ein Ausführungsbeispiel der erfindungsgemäßen Clientvorrichtung in schematischer Darstellung;
- Fig. 6: ein Ausführungsbeispiel des erfindungsgemäßen Authentifizierungsservers in schematischer Darstellung; und
- Fig. 7: ein Ausführungsbeispiel des erfindungsgemäßen Anwendungsservers in schematischer Darstellung.

In den Figuren sind gleiche oder funktionsgleiche Elemente mit denselben Bezugszeichen versehen, sofern nichts anderes angegeben ist.

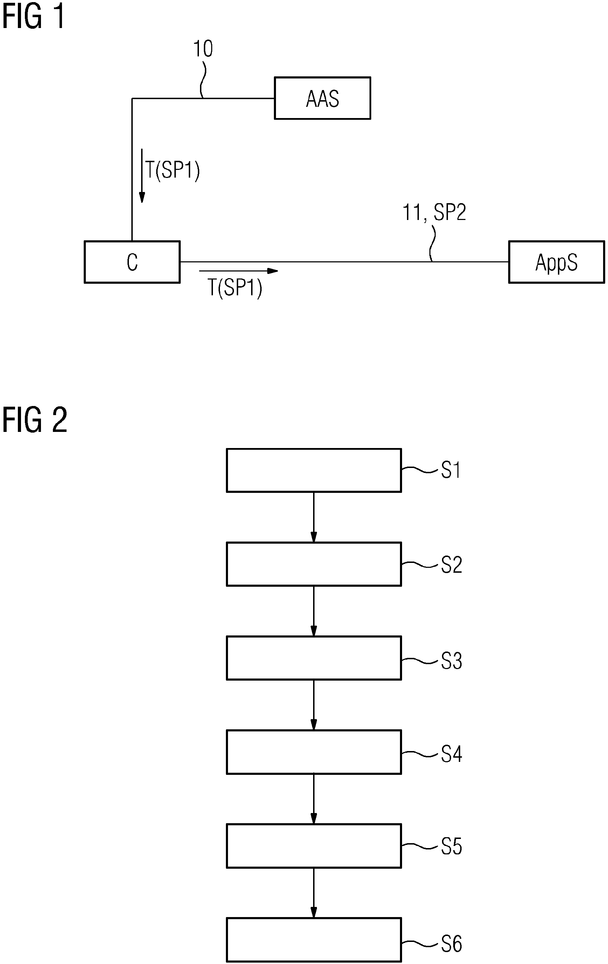

Figur 1 zeigt eine Clientvorrichtung C, einen Authentifizierungsserver AAS sowie einen Anwendungsserver AppS, die in einem Kommunikationsnetzwerk miteinander verbunden sind.

Der Authentifizierungsserver AAS, der beispielsweise eine Komponente eines Identifizierungs- und Zugangsmanagementsystems ist, ist derart eingerichtet, die Clientvorrichtung auf Anwendungsebene basierend auf beispielsweise einem Nutzernamen und Passwort zu authentifizieren und eine Zugangsberechtigung zu einer angefragten Anwendung zu prüfen. Um eine solche Authentifizierung und Autorisierung nicht bei jeder Anfrage wiederholen zu müssen, übermittelt der Authentifizierungsserver AAS einen Authentisierungsnachweis T nach erfolgreicher Authentifizierung und Autorisierung an die Clientvorrichtung. Der Authentisierungsnachweis T wird häufig auch als Authentifizierungstoken bezeichnet. Die Clientvorrichtung C übermittelt den Authentisierungsnachweis T anschließend bei einem Aufruf der Anwendung an den Anwendungsserver AppS und erhält daraufhin Zugriff auf die Anwendung.

Zur Übermittlung einer Anforderungsnachricht wird eine Kommunikationsverbindung zwischen der Clientvorrichtung C und dem Authentifizierungsserver AAS dabei als sichere Kommunikationsverbindung 10 eingerichtet. In gleicher Weise wird zwischen der Clientvorrichtung C und dem Anwendungsserver AppS eine sichere zweite Kommunikationsverbindung 11 erstellt. Die erste und die zweite sichere Verbindung 10, 11 werden durch ein Sicherheitsprotokoll, beispielsweise einem Transportschichtsicherheits-Protokoll, kurz TLS-Protokoll, oder einem IPsec-Protokoll eingerichtet. Weitere verwendbare Sicherheitsprotokolle sind ein DTLS-Protokoll, ein SSH-Protokoll, ein QUIC-Protokoll, ein https-Protokoll, ein Bluetooth-Protokoll, ein WLAN-Protokoll, ein ZigBee-Protokoll, ein IKE-Protokoll oder ein MACsec-Protokoll.

Im Zuge des Sicherheitsprotokolls authentifizieren sich die Kommunikationspartner gegenseitig anhand von digitalen Zertifikaten. Durch das Sicherheitsprotokoll werden weitere Protokolleigenschaften zwischen den Kommunikationspartnern vereinbart und die sichere Kommunikationsverbindung wird entsprechend den vereinbarten Protokolleigenschaften, wie beispielsweise die zu verwendenden Verschlüsselungsfunktionen, die für die Datenverschlüsselung zu verwendende Sitzungsschlüssel und weitere Parameter, eingerichtet. Ein Sicherheitsparameter einer sicheren Kommunikationsverbindung enthält die aktuell zur Authentifizierung verwendeten kryptographischen Schlüssel oder eine Referenz auf den Schlüssel und/oder weitere Daten zu den aktuell verwendeten Protokolleigenschaften. Der kryptographische Schlüssel ist beispielsweise durch ein digitales Zertifikat dargestellt.

Figur 2 zeigt nun mit Bezug auf Figur 1 den Ablauf des erfindungsgemäßen Verfahrens zur Authentifizierung der Clientvorrichtung C bei einem Zugriff auf einen Anwendungsserver AppS, der eine Anwendung bereitstellt. In einem erste Verfahrensschritt S1 fordert die Clientvorrichtung C einen Authentisierungsnachweis T für den Zugriff auf den Anwendungsserver AppS über eine sichere Kommunikationsverbindung 10 beim Authentifizierungsserver AAS an.

Im Verfahrensschritt S2 empfängt die Clientvorrichtung C den Authentisierungsnachweis T, in dem ein erster Sicherheitsparameter SP1 vom Authentifizierungsserver AAS eingefügt wurde. Anschließend, im Verfahrensschritt S3, richtet die Clientvorrichtung C eine zweite sichere Kommunikationsverbindung 11 zum Anwendungsserver AppS ein. Die zweite sichere Kommunikationsverbindung 11 ist dabei entsprechend einem zweiten Sicherheitsparameter SP2 konfiguriert. Über diese zweite sichere Kommunikationsverbindung 11 sendet die Clientvorrichtung C den Authentisierungsnachweis T an den Anwendungsserver AppS. Dieser überprüft im Verfahrensschritt S5 den zweiten Sicherheitsparameter SP2 der zweiten sicheren Kommunikationsverbindung 11 mit dem ersten Sicherheitsparameter SP1, der im Authentisierungsnachweis T enthalten ist. Entspricht der zweite Sicherheitsparameter SP2 dem ersten Sicherheitsparameter SP1 aus dem Authentisierungsnachweis T, wird der Clientvorrichtung C der Zugriff auf den Anwendungsserver und insbesondere auf die angeforderte Anwendung gewährt, siehe Verfahrensschritt S6.

Somit legt der Authentisierungsnachweis T die zulässigen Sicherheitsparameter für die zweite sichere Kommunikationsverbindung 11 fest. So umfasst der erste Sicherheitsparameter SP1 neben den Protokollidentifizierungsdaten und Protokolldaten zum Definieren von Sicherheitsprotokolleigenschaften auch Laufzeitdaten zur Angabe einer Laufzeit, während der die sichere Kommunikationsverbindung 11 zum Austausch von Daten zwischen der Clientvorrichtung C und dem Anwendungsserver AppS verwendbar ist. Des Weiteren umfasst der erste Sicherheitsparameter SP1 Absicherungsdaten zum Bestimmen einer Absicherung für eine bestimmte Anwendung. Damit gibt der erste Sicherheitsparameter SP1 eine Richtlinie vor, für welche Anwendung der Authentisierungsnachweis T verwendet werden kann. Die Kommunikationspartnerdaten geben auch für den Anwendungsserver oder den Authentifizierungsserver beispielsweise die zur Authentifizierung zu verwendenden Berechtigungsnachweise vor.

Zusätzlich zu den eigentlichen Protokollparametern wird auch eine Referenz auf einen zu verwendenden digitalen Schlüssel für die Authentifizierung als Teil des Authentisierungsnachweises T eingefügt. Der Anwendungsserver AppS akzeptiert den Zugriff nur dann, wenn die zwischen der Clientvorrichtung C und dem Applikationsserver AppS aufgebaute zweite sichere Kommunikationsverbindung 11 die durch den Authentisierungsnachweis T definierten Eigenschaften erfüllt. Insbesondere wird das von der Clientvorrichtung C zu verwendende Clientzertifikat durch den Authentisierungsnachweis T spezifiziert. Statt dem Clientzertifikat kann auch ein für das Zertifikat spezifischer Referenzwert oder der im Clientzertifikat enthaltene öffentliche Schlüssel der Clientvorrichtung C enthalten sein. Der Referenzwert des Clientzertifikates kann beispielsweise ein Hashwert des Clientzertifikats oder eine sonstige eindeutige Kennung des Clientzertifikates sein.

Die Einschränkung der zweiten sicheren Verbindung 11 auf den im Authentisierungsnachweis T enthaltenen ersten Sicherheitsparameter SP1 bietet einen hohen Schutz des Authentisierungsnachweises T, da der Authentisierungsnachweis T nur dann gültig ist, wenn es über eine von der Clientvorrichtung C authentifizierte sichere zweite Kommunikationsverbindung 11 übertragen wurde.

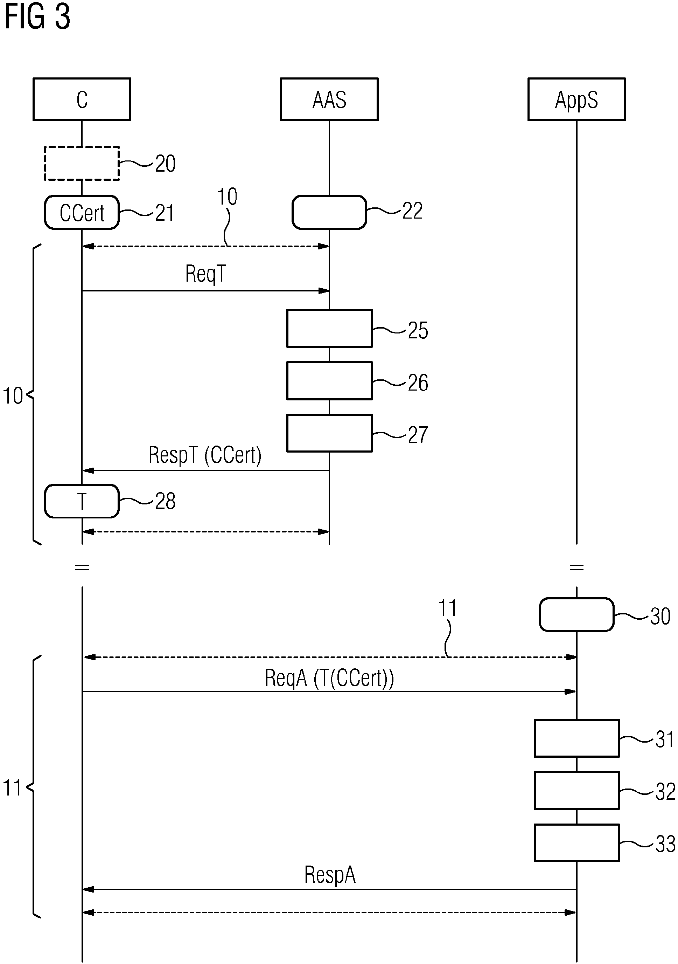

Figur 3 zeigt einen ersten beispielhaften Ablauf des Verfahrens.

Üblicherweise ist im Authentifizierungsserver AAS ein vertrauenswürdiges digitales Zertifikat zur Authentifizierung des Authentifizierungsservers AAS bei Verbindungsaufbau vorhanden, siehe 22. Dieses digitale Zertifikat ist üblicherweise von einer allgemein anerkannten Zertififizierungsstelle (Certification Authority) ausgestellt und durch diese digital signiert. In gleicher Weise besitzt der Anwendungsserver AppS ein ihm zugeordnetes vertrauenswürdiges digitales Zertifikat, siehe 30, das üblicherweise durch eine Zertifizierungsstelle ausgestellt und durch die Signatur einer vertrauenswürdigen Stelle bestätigt ist. Die Clientvorrichtung C benötigt zu einer Authentifizierung gegenüber dem Anwendungsserver AppS und optional auch gegenüber dem Authentifizierungsserver AAS ebenfalls ein digitales Zertifikat. Ein solches Clientzertifikat CCert, siehe 21, kann durch eine Zertifizierungsstelle überprüft und der Clientvorrichtung C zugeordnet sein. Häufig ist jedoch kein solches von vertrauenswürdiger Seite signiertes Clientzertifikat CCert vorhanden und die Clientvorrichtung C erzeugt selbst ein Schlüsselpaar, bestehend aus einem öffentlichen und einem privaten Schlüssel, und erstellt daraus ein Clientzertifikat CCert, das den öffentlichen Schlüssel enthält und mit dem privaten Schlüssel signiert ist. Ein solches Zertifikat wird selbstsigniertes Clientzertifikat genannt. Es ist auch möglich, dass ein Client über ein von einer lokalen, nicht allgemein anerkannten Stelle ausgestelltes Clientzertifikat verfügt.

Entsprechend authentisiert sich der Authentifizierungsserver und die Clientvorrichtung gegenseitig anhand ihrer Zertifikate 22, CCert und es wird eine erste sichere Kommunikationsverbindung 10 mit Sicherheitsparametern, die durch das von der Clientvorrichtung C und dem Authentifizierungsserver AAS verwendeten Sicherheitsprotokoll festgelegt wurden, aufgebaut und zur weiteren Kommunikation verwendet. Anschließend fordert die Clientvorrichtung C mittels einer Anforderungsnachricht ReqT beim Authentifizierungsserver AAS die Ausstellung eines Authentisierungsnachweises T für die Clientvorrichtung C zum Zugriff auf die gewünschte Anwendung an. In dieser Nachricht wird eine Information übermittelt, um die Anwendung und gegebenenfalls auch den Anwendungsserver AppS zu spezifizieren, für den der Authentisierungsnachweis T angefordert wird. Des Weiteren enthält die Nachricht beispielsweise eine Nutzerkennung und ein Passwort der Clientvorrichtung C.

Der Authentifizierungsserver AAS authentifiziert die Clientvorrichtung C anhand der Nutzerkennung und des Passworts und ermittelt dessen Berechtigungen, siehe 25. Anschließend ermittelt der Authentifizierungsserver AAS das von der Clientvorrichtung C für die Authentifizierung beim Aufbau der ersten sicheren Kommunikationsverbindung 10 verwendete Clientzertifikat CCert, siehe 26. Der Authentifizierungsserver AAS stellt einen Authentisierungsnachweis T aus und fügt eine erste Sicherheitsinformation, die hier beispielsweise lediglich das Clientzertifikat CCert umfasst, ein, siehe 27. In einer Antwortnachricht RespT sendet der Authentifizierungsserver AAS den Authentifizierungsnachweis T(CCert) an die Clientvorrichtung C. In der Clientvorrichtung C ist nun der Authentisierungsnachweis T verfügbar, siehe 28.

Nachfolgend wird eine sichere zweite Kommunikationsverbindung 11 zwischen der Clientvorrichtung C und dem Anwendungsserver AppS aufgebaut, und dazu ein Clientzertifikat als zweiten Sicherheitsparameter zur Authentifizierung verwendet. Über diese sichere zweite Kommunikationsverbindung 11 wird von der Clientverbindung C mittels einer Anforderungsnachricht ReqA ein Zugriff auf eine Anwendung A angefragt und dazu der Authentisierungsnachweis T(CCert) mit dem ersten Sicherheitsparameter, hier CCert, übermittelt. Der Anwendungsserver AppS überprüft die Gültigkeit des Authentisierungsnachweises T, siehe 31, und bestimmt den zweiten Sicherheitsparameter, hier also das Clientzertifikat der zweiten sicheren Kommunikationsverbindung 11, siehe 32. Nun überprüft der Anwendungsserver AppS, ob der zweite Sicherheitsparameter, also das verwendete Clientzertifikat mit dem ersten Sicherheitsparameter CCert, der im Authentisierungsnachweis T enthalten ist, entspricht. Ist dies der Fall, so wird der Clientvorrichtung C der Zugriff auf den Anwendungsserver AppS und insbesondere auf die angefragte Anwendung gewährt, was durch eine Antwortnachricht Resp A dargestellt ist.

Der Authentifizierungsserver AAS kann auch mehrere erlaubte Clientzertifikate oder digitale Schlüssel in den Authentisierungsnachweis T in Schritt 27 einfügen. Dadurch sind alle im Authentisierungsnachweis T angegebenen Clientzertifikate für den Zugriff auf den Anwendungsserver AppS verwendbar. Jedes für die zweite sichere Kommunikationsverbindung 11 verwendete Clientzertifikat, das einem Clientzertifikat aus der Liste von Clientzertifikaten im Authentisierungsnachweis T entspricht, führt in der Überprüfung im Schritt 33 zu einem positiven Ergebnis.

Der erste Sicherheitsparameter kann als integraler Bestandteil in den Authentisierungsnachweis T eingefügt werden. Der erste Sicherheitsparameter kann aber auch als separater zweiter Authentisierungsnachweis ausgebildet und zusammen mit dem üblichen Authentisierungsnachweis an die Clientvorrichtung C übermittelt werden.

In einer Variante wird zumindest ein Teil der ersten Sicherheitsinformation nicht aus der ersten sicheren Kommunikationsverbindung 10 durch den Authentifizierungsserver AAS ermittelt, sondern vom Authentifizierungsserver AAS selbst vorgegeben. Ein oder mehrere Clientzertifikate können beispielsweise aus einem Nutzerprofil der Clientvorrichtung, das im Authentifizierungsserver AAS gespeichert ist, ermittelt werden. Im Authentifizierungsserver AAS können beispielsweise unterschiedliche Clientzertifikate für verschiedene angefragten Anwendung vorliegen. Der Authentifizierungsserver AAS fügt abhängig von der angefragten Anwendung das entsprechende anwendungsspezifische Clientzertifikat in den Authentisierungsnachweis T ein.

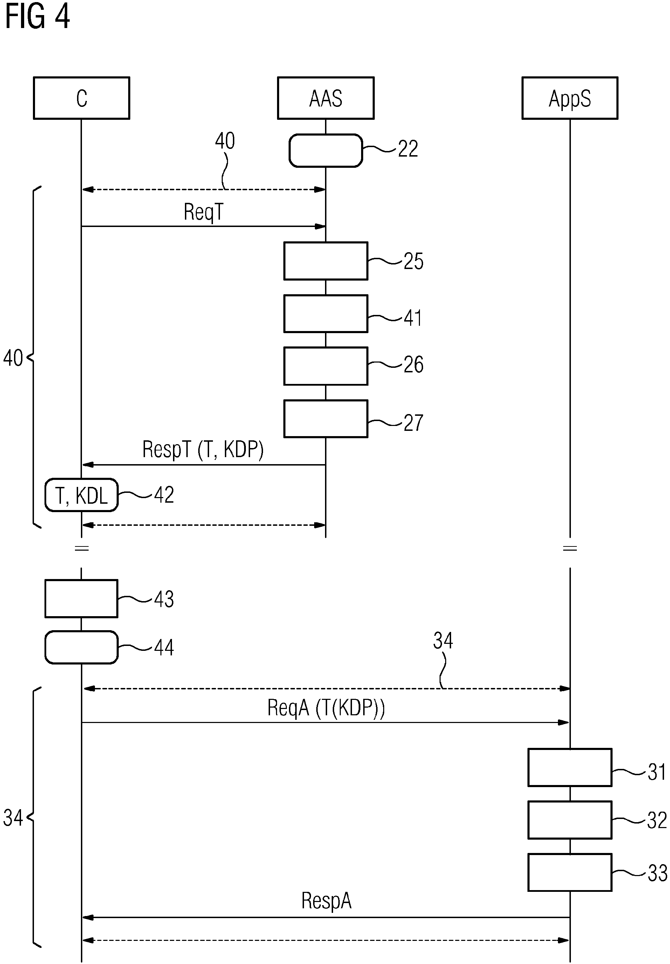

Figur 4 zeigt einen Ablauf des Verfahrens, in dem eine erste sichere Verbindung 40 ohne eine Authentifizierung der Clientvorrichtung C gegenüber dem Authentifizierungsserver AAS eingerichtet wird. Der Client C besitzt in diesem Fall kein Clientzertifikat, lediglich der Authentifizierungsserver AAS hat ein digitales Zertifikat 22. Beim Aufbau der ersten sicheren Kommunikationsverbindung 40 findet eine serverseitige Authentifizierung und ein Schlüsselvereinbarung, beispielsweise durch einen TLS-Handshake-Protokoll statt.

Bei einer nachfolgenden Anforderung ReqT eines Authentisierungsnachweises T für einen Anwendungsserver AppS werden im Authentifizierungsserver AAS die Authentifizierung der Clientvorrichtung und die Berechtigungen der Clientvorrichtung C auf Applikationsebene, also beispielsweise über Nutzerkennung und Passwort überprüft, siehe 25. Nun werden im neuen Schritt 41 beispielsweise ein Schlüsselableitungsparameter KDP zur Generierung eines deterministischen Zertifikatsschlüssels ermittelt. Es können auch weitere Komponenten des Sicherheitsparameters der ersten sicheren Kommunikationsverbindung ermittelt, siehe 26, und in den Authentifizierungstoken T eingefügt bzw. mit diesem verbunden werden, siehe 27. Mit der Antwortnachricht RespT übermittelt der Authentifizierungsserver AAS nun den Authentisierungsnachweis T zusammen mit den Schlüsselableitungsparametern KDP an die Clientvorrichtung C. Diese liegen nun in der Clientvorrichtung C vor siehe 42.

Die Clientvorrichtung C generiert abhängig vom Schlüsselableitungsparameter KDP einen kryptografischen Schlüssel, erzeugt ein Clientzertifikat, das den entsprechenden Schlüssel enthält, und signiert es selbst, siehe 43. Somit ist ein Clientzertifikat 44 zumindest temporär in der Clientvorrichtung C verfügbar. Das Clientzertifikat 44 wird zur Authentifizierung beim Aufbau der sicheren zweiten Kommunikationsverbindungen 34 von der Clientvorrichtung C verwendet.

Bei einer Anfragenachricht ReqA für die Anwendung A übermittelt die Clientvorrichtung C den Authentisierungsnachweis T an den Anwendungsserver AppS über eine zweite sichere Kommunikationsverbindung 34, die nun mit dem erzeugten, selbstsignierten Clientzertifikat 44 als zweiter Sicherheitsparameter erstellt wurde. Der Authentisierungsnachweis T enthält den Schlüsselableitungsparameter KDP, der bereits im Authentifizierungsserver in den Authentisierungsnachweis T eingefügt bzw. dem Authentisierungsnachweise zugewiesen wurde. Im Anwendungsserver AppS wird nun die Gültigkeit des Authentifizierungsparameters T wie bereits beschrieben überprüft, siehe 31, und der zweiten Sicherheitsparameter der zweiten sicheren Kommunikationsverbindung 34, also das aus dem Schlüsselableitungsparameter KDP erzeugte, selbstsignierte Clientzertifikat 44 ermittelt, siehe 32. Anschließend wird überprüft, ob der zweite Sicherheitsparameter mit dem ersten Sicherheitsparameter im Authentisierungsnachweis T übereinstimmt bzw. durch die Vorgaben der ersten Sicherheitsinformation erlaubt ist, siehe 33. Ist dies der Fall, wird der Clientvorrichtung C der Zugriff beispielsweise durch die Nachricht RespA mitgeteilt.

Das in Figur 4 gezeigte Verfahren eignet sich insbesondere zur Verwendung in industriellen Automatisierungsanlagen. Hierbei ist der Authentifizierungsserver typischerweise Teil eines eingebetteten Systems, sodass die Clientvorrichtung bei einer Anfrage an den Anwendungsserver alle notwendigen Informationen aus dem Sicherheitsprotokoll beim Aufbau der zweiten sicheren Kommunikationsverbindung ermitteln und somit zur Verfügung stellen kann.

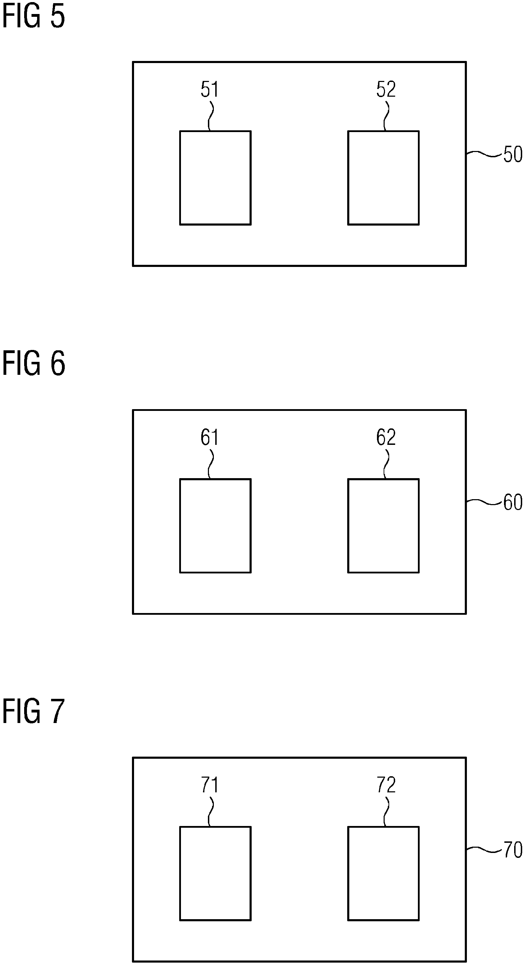

Figur 5 zeigt eine Clientvorrichtung 50, die eine Verbindungseinheit 51 und eine Steuerungseinheit 52, die durch mindestens einen Prozessor ausgebildet sind. Die Verbindungseinheit 51 ist derart ausgebildet, die erste und zweite sichere Kommunikationsverbindung entsprechend dem Sicherheitsprotokoll und dem beschriebenen Verfahren aufzubauen. Die Steuerungseinheit 52 ist derart eingerichtet, den Authentisierungsnachweis T aus der ersten sichere Kommunikationsverbindung zu ermitteln und über die zweite sichere Kommunikationsverbindung weiterzuleiten. Alternativ ist sie derart ausgebildet den Authentisierungsnachweis auszuwerten und ein Clientzertifikat aus dem daraus extrahierten Ableitungsparameter zu erzeugen.

Figur 6 zeigt eine Authentifizierungsserver 60, der eine Verbindungseinheit 61 und eine Sicherheitsparametereinheit 62, die durch mindestens einen Prozessor ausgebildet sind. Die Verbindungseinheit 61 ist derart ausgebildet, die erste sichere Kommunikationsverbindung entsprechend dem Sicherheitsprotokoll und dem beschriebenen Verfahren aufzubauen. Die Sicherheitsparametereinheit 62 ist derart ausgebildet, einen ersten Sicherheitsparameter zu ermitteln und in den angeforderten Authentisierungsnachweis einzufügen. Der Authentifizierungsserver 60 ist des Weiteren derart ausgebildet, das beschriebene Verfahren auszuführen.

Figur 7 zeigt eine Authentifizierungsserver 70, der eine Verbindungseinheit 71 und eine Überprüfungseinheit 72, die durch mindestens einen Prozessor ausgebildet sind. Die Verbindungseinheit 71 ist derart ausgebildet, die zweite sichere Kommunikationsverbindung entsprechend dem Sicherheitsprotokoll und dem beschriebenen Verfahren aufzubauen. Die Überprüfungseinheit 72 ist derart ausgebildet den zweiten Sicherheitsparameter zu ermitteln, mit dem ersten Sicherheitsparameter aus dem empfangene Authentisierungsnachweis zu überprüfen und den Zugriff für die Clientvorrichtung auf die angeforderten Anwendung nur dann zu gewähren, wenn der zweite Sicherheitsparameter dem ersten Sicherheitsparameter entspricht. Der Anwendungsserver 70 ist des Weiteren derart ausgebildet, das beschriebene Verfahren auszuführen.

Das in Figur 4 beschriebene Verfahren ist besonders geeignet, wenn die Clientvorrichtung nur eingeschränkten Zugriff auf eine öffentliche Schlüsselinfrastruktur besitzt, jedoch ein Vertrauensverhältnis zu einem Authentifizierungsserver besteht. In diesem Fall kann der Authentisierungsnachweis T alle notwendigen Informationen enthalten, die es der Clientvorrichtung ermöglichen, mit dem Anwendungsserver eine Verbindung aufzubauen.

Die Erfindung verbessert den Schutz einer Authentisierungsnachweisbasierten Authentifizierung der Clientvorrichtung, die im Internet und auch im Internet der Dinge-Umfeld breit verwendet wird. Damit wird es möglich, eine Authentifizierung der Clientvorrichtung auf Ebene der sicheren Kommunikationsverbindung zu nutzen, ohne dass ein herkömmliches, aufwendiges Management von Clientzertifikaten benötigt wird. Des Weiteren ist dadurch eine sichere temporäre Nutzung eines selbstsignierten Zertifikates möglich, zu dem es kein gültiges Wurzelzertifikat von einer vertrauenswürdigen Zertifikatausstellungsstelle gibt. Der Authentifizierungsserver kann durch die Vorgabe von weiteren Protokollidentifizierungsarten eine sichere Übertragung des Authentisierungsnachweises gewährleisten. Wird die erste Sicherheitsinformation im Authentisierungsnachweis nicht eingehalten, wird die Anfrage der Clientvorrichtung C beim Anwendungsserver nicht ausgeführt und kann eine Warnmeldung auslösen.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Authentifizierung einer Clientvorrichtung (C) bei einem Zugriff auf einen Anwendungsserver (AppS), der eine Anwendung bereitstellt, aufweisend die Schritte:
- Anfordern (S1) eines Authentisierungsnachweises (T) für den Zugriff auf den Anwendungsserver (AppS) über eine erste sichere Kommunikationsverbindung (10) bei einem Authentifizierungsserver (AAS) durch die Clientvorrichtung (C),
- Empfangen (S2) des Authentisierungsnachweises (T), in den ein erster Sicherheitsparameter vom Authentifizierungsserver (AAS) eingefügt wurde, durch die Clientvorrichtung (C),
- Einrichten (S3) einer zweiten sicheren Kommunikationsverbindung (11) zwischen der Clientvorrichtung (C) und dem Anwendungsserver (AppS), die entsprechend einem zweiten Sicherheitsparameter konfiguriert ist,
- Senden (S4) des Authentisierungsnachweises (T) über die zweite sichere Kommunikationsverbindung (11) von der Clientvorrichtung (C) an den Anwendungsserver (AppS),
- Überprüfen (S5) des zweiten Sicherheitsparameters mit dem ersten Sicherheitsparameter aus dem Authentisierungsnachweis (T) durch den Anwendungsserver (AppS), und
- Gewähren (S6) des Zugriffs für die Clientvorrichtung (C) auf den Anwendungsserver (AppS) nur dann, wenn der zweite Sicherheitsparameter dem ersten Sicherheitsparameter entspricht.

2. Verfahren nach Anspruch 1, wobei die erste und die zweite sichere Verbindung (10, 11) entsprechend einem Sicherheitsprotokoll, insbesondere einem TransportschichtsicherheitsProtokoll TLS oder einem IPsec-Protokoll eingerichtet wird.

3. Verfahren nach einem der vorangehenden Ansprüche, wobei der erste Sicherheitsparameter (SP1) mindestens einen kryptografischen Schlüssel oder mindestens eine Referenz auf den kryptografischen Schlüssel zum Authentifizieren der Clientvorrichtung (C) durch den Anwendungsserver (AppS) enthält.

4. Verfahren nach einem der vorangehenden Ansprüche, wobei der erste Sicherheitsparameter zusätzlich mindestens eine der nachfolgenden Daten enthält:
Protokollidentifizierungsdaten zum Identifizieren des Sicherheitsprotokolls;
Protokolldaten zum Definieren von Protokolleigenschaften des Sicherheitsprotokolls;
Absicherungsdaten zum Bestimmen einer Absicherung für eine bestimmte Anwendung;
Laufzeitdaten zur Angabe einer Laufzeit, während der die sichere Kommunikationsverbindung (11) zum Austausch von Daten zwischen der Clientvorrichtung (C) und dem Anwendungsserver (AppS) verwendbar ist; und/oder
Kommunikationspartnerdaten zum Bestimmen von Voraussetzungen für die Clientvorrichtung (C) und/oder den Authentifizierungsserver (AAS) bzw. dem Anwendungsserver (AppS).

5. Verfahren nach einem der vorangehenden Ansprüche, wobei der Authentifizierungsserver (AAS) den Sicherheitsparameter der ersten sicheren Kommunikationsverbindung (10) ermittelt und diesen als ersten Sicherheitsparameter in den Authentisierungsnachweis (T) einfügt.

6. Verfahren nach Anspruch 5, wobei die Clientvorrichtung (C) mit einem ersten Client-Zertifikat beim Aufbau der ersten sicheren Kommunikationsverbindung (10) im Authentifizierungsserver (AAS) authentifiziert wird, das erste Client-Zertifikat vom Authentifizierungsserver (AAS) ermittelt und als erster Sicherheitsparameter in den Authentisierungsnachweis (T) eingefügt wird.

7. Verfahren nach Anspruch 6, wobei das erste Client-Zertifikat nur dann als erste Sicherheitsinformation in den Authentisierungsnachweis (T) eingefügt wird, wenn das erste Client-Zertifikat mit mindestens einem im Authentifizierungsserver (AAS) vorgegebenen Client-Zertifikat übereinstimmt.

8. Verfahren nach Anspruch 7, wobei eine Referenz auf das vorgegebene Client-Zertifikat als erster Sicherheitsparameter in den Authentisierungsnachweis (T) eingefügt wird.

9. Verfahren nach einem der vorangehenden Ansprüche, wobei der Authentifizierungsserver (AAS) mehrere unterschiedliche vorgegebene Client-Zertifikate in den ersten Sicherheitsparameter des Authentisierungsnachweises (T) einfügt.

10. Verfahren nach einem der Ansprüche 1 bis 4, wobei die Clientvorrichtung (C) aus dem Authentisierungsnachweis den ersten Sicherheitsparameter ermittelt und die zweite sichere Kommunikationsverbindung (11) entsprechend dem ermittelten ersten Sicherheitsparameter einrichtet.

11. Verfahren nach Anspruch 10, wobei ein Schlüsselableitungsparameter (KDP) als erster Sicherheitsparameter in den Authentisierungsnachweis (T) eingefügt wird und das Clientzertifikat für die zweite sichere Kommunikationsverbindung (11) abhängig vom Schlüsselableitungsparameter (KDP) in der Clientvorrichtung erzeugt wird.

12. Authentifizierungsserver zur Authentifizierung einer Clientvorrichtung zum Zugriff auf einen Anwendungsserver (AppS), umfassend mindestens einen Prozessor, der derart ausgebildet ist, das Verfahren nach einem der Ansprüche 1 bis 11 auszuführen.

13. Anwendungsserver zur Authentifizierung einer Clientvorrichtung (C) zum Zugriff auf eine Anwendung, umfassend mindestens einen Prozessor, der derart ausgebildet ist, das Verfahren nach einem der Ansprüche 1 bis 11 auszuführen.

14. Clientvorrichtung umfassend mindestens einen Prozessor, die derart ausgebildet ist, das Verfahren nach einem der Ansprüche 1 bis 11 auszuführen.

15. Computerprogrammprodukt, das direkt in einen Speicher eines digitalen Computers ladbar ist, umfassend Programmcodeteile, die dazu geeignet sind, die Schritte des Verfahrens nach einem der Ansprüche 1 bis 11 durchzuführen.
